# EUROPÄISCHE PATENTSCHRIFT

(11) **EP 0 424 650 B1**
(45) Veröffentlichungstag und Bekanntmachung des Hinweises auf die Patenterteilung: **16.06.1993**
(21) Anmeldenummer: 90117284.1
(22) Anmeldetag: 07.09.1990
(51) Int. Cl.: B60P 7/08

(54) **LKW mit Ladebrücke**
Lorry with loading ramp
Camion avec rampe de chargement

(30) Priorität: 24.10.1989 DE 3935267
(43) Veröffentlichungstag der Anmeldung: 02.05.1991
(73) Patentinhaber: MAN Nutzfahrzeuge Aktiengesellschaft, 80976 München (DE)
(72) Erfinder: Kloss, Hans Joachim, Dipl.-Ing. (FH), D-8060 Dachau (DE)

(56) Entgegenhaltungen:
- GB-A- 2 167 354
- US-A- 3 412 693
- US-A- 3 804 436

## Beschreibung

Die Erfindung bezieht sich auf einen Lkw mit einer Ladebrükke und daran angebrachten Zurrabstützungen, an denen Ösenelemente zum Einhängen von Zurrmitteln angeordnet sind.

Zum Zwecke der Befestigung von Ladung werden an den Rändern von Ladebrücken Zurrabstützungen angebracht, die zum Einhängen von Zurrmitteln wie z.B. Ketten, Gurten, Seilen über Schäkel oder Karabiner vorgesehen sind. Alle bekannten Zurrabstützungen haben den Nachteil, daß sie sehr viel Platz benötigen und somit die Ladebreite reduzieren und oft schwer zugänglich sind.

Eine gattungsgemäße Ladebrücke und davon angebrachte Zurrabstützungen sind Z.B.aus GB-A-2 167 354 bekannt.

Der Erfindung liegt die Aufgabe zugrunde, eine Einhängeeinrichtung für Zurrmittel mit geringstem Platzbedarf zu schaffen.

Dies wird erfindungsgemäß dadurch erreicht, daß das in einer Mulde der Zurrabstützung einliegende Ösenelement etwa in der Mitte der Ösenlängsachse mindestens um die Materialstärke eines einzuhängenden Flachkarabiners gekröpft ist. Solcherart verbleibt für die Ladung die größtmöglichste Bodenbreite.

Nach einem besonderen Merkmal der Erfindung ist das Ösenelement aus der Mulde ausschwenkbar. Wenn die Ladung im ungünstigsten Fall auf der Mulde des Ösenelementes plaziert wird, ist auch dann eine problemlose Verzurrung gewährleistet, indem das Ösenelement nach außen ausgeschwenkt wird.

Die Ausschwenkung kann soweit über 90° hinaus erfolgen, daß der nach DIN 75410/1 geforderte Schwenkwinkel der Zurrmittel erreicht wird. Die Erfindung ist in einem Ausführungsbeispiel dargestellt und beschrieben.

Es zeigt:
- Fig. 1: einen Seitenschnitt der Verzurreinrichtung,
- Fig. 2: eine Draufsicht auf die Verzurreinrichtung,
- Fig. 3: eine Seitenansicht des Ösenelementes,
- Fig. 4: eine Draufsicht des Ösenelementes.

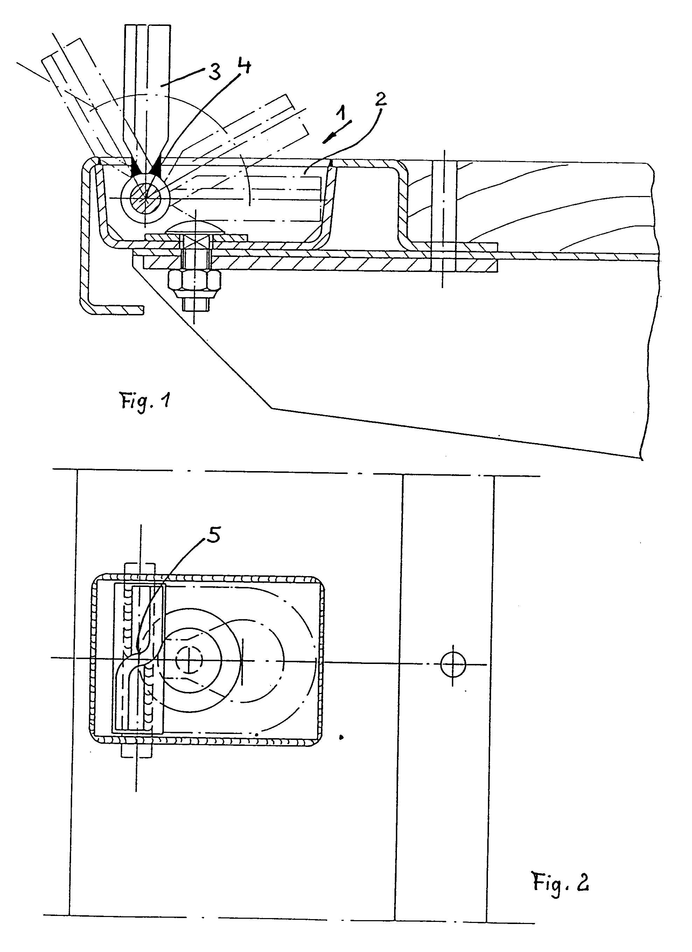

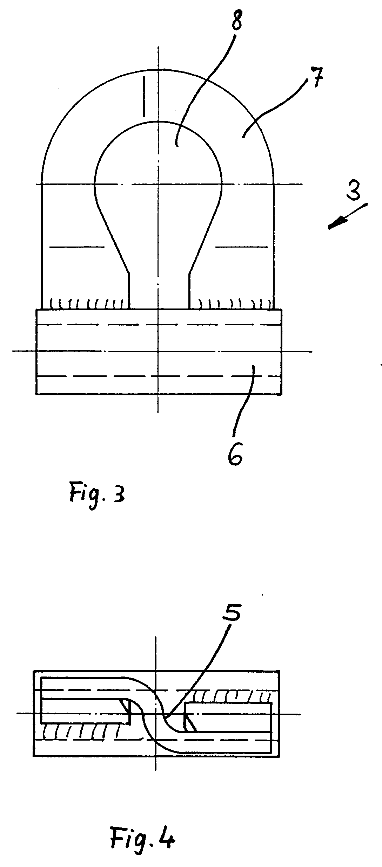

Fig. 1 zeigt die erfindungsgemäße Verzurreinrichtung mit der Zurrabstützung 1, die eine Mulde 2 aufweist, in der ein Ösenelement 3 angeordnet ist, das um einen Drehpunkt 4 schwenkbar gelagert ist und aus seiner in der Mulde 2 einliegenden Position in eine aus der Mulde herausstehende Position bringbar ist, die allen Anforderungen an die Ausschwenkbarkeit nach DIN 75410/1 genügt. Aus Fig. 2 ist die Kröpfung 5 im Ösenbereich zu ersehen. Fig. 3 zeigt das Ösenelement 3, bestehend aus Lagerrohr 6 und damit fest verbundenem Ösenblech 7, das eine Öse 8 aufweist. Aus Fig. 4 ist deutlich die Kröpfung 5 des Ösenbleches 7 zu entnehmen.

### Bezugszeichenliste

- 1: Zurrabstützung
- 2: Mulde an 1
- 3: Ösenelement
- 4: Drehpunkt
- 5: Kröpfung
- 6: Lagerrohr
- 7: Ösenblech
- 8: Öse

## Patentansprüche

1. Lkw mit einer Ladebrücke und daran angebrachten Zurrabstützungen, an denen Ösenlemente (3) zum Einhängen von Zurrmitteln angeordnet sind, dadurch gekennzeichnet, daß das in einer Mulde (2) der Zurrabstützung (1) einliegende Ösenelement (3) etwa in der Mitte der Ösenlängsachse mindestens um die Materialstärke eines einzuhängenden Flachkarabiners gekröpft (5) ist.

2. Lkw mit einer Ladebrücke nach Anspruch 1, dadurch gekennzeichnet, daß das Ösenelement (3) um einen Drehpunkt (4) aus der Mulde (2) ausschwenkbar ist.

3. Lkw nach Anspruch 1 oder 2, dadurch gekennzeichnet, daß das Ösenelement (3) einen Schwenkbereich von über 90° aufweist.

## Claims

1. Truck with platform body and lashing supports attached to it, which supports are equipped with loop elements (3) for hooking up lashing media, characterised by the fact that the loop element (3) located in a cavity (2) of the lashing support (1) is, approximately in the centre of the longitudinal axis of the loop, turned (5) by at least the thickness of a flat carabine hook which is to be inserted.

2. Truck with platform body as under Claim 1, characterised by the fact that the loop element (3) can be slewed about a fulcrum (4) out of the cavity (2).

3. Truck as under Claim 1 or 2, characterised by the fact that the loop element (3) has a slewing range of over 90°.

## Revendications

1. Camion avec une rampe de chargement et des appuis d'amarrage installés sur cette rampe et sur lesquels sont disposés des éléments d'anneaux (3) pour accrocher des moyens d'amarrage, camion caractérisé en ce que l'élément d'anneau (3) placé à l'intérieur d'une cavité (2) de l'appui d'amarrage (1) est doublement coudé (5) à peu près dans le milieu de l'axe longitudinal de l'anneau, d'au moins l'épaisseur du matériau d'un mousqueton plat à accrocher.

2. Camion avec une rampe de chargement selon la revendication 1, caractérisé en ce que l'élément d'anneau (3) est susceptible de pivoter hors de la cavité (2) autour d'un point de rotation (4).

3. Camion selon la revendication 1 ou la revendication 2, caractérisé en ce que l'élément d'anneau (3) a une étendue de pivotement supérieure à 90°.
